# EUROPÄISCHE PATENTSCHRIFT

(11) **EP 1 995 516 B1**
(45) Veröffentlichungstag und Bekanntmachung des Hinweises auf die Patenterteilung: **02.06.2010**
(21) Anmeldenummer: 07010224.9
(22) Anmeldetag: 23.05.2007
(51) Int. Cl.: F23D 14/66, F23L 15/04, F28D 7/16, F28F 1/02, F28F 1/12

(54) **Rekuperatorbrenner mit abgeflachten Wärmetauscherrohren**
Recuperator burner with flattened heat exchange pipes
Brûleur à récupération doté de tuyaux d'échange de chaleur aplatis

(43) Veröffentlichungstag der Anmeldung: 26.11.2008
(73) Patentinhaber: WS-Wärmeprozesstechnik GmbH, 71272 Renningen (DE)
(72) Erfinder: Wünning, Joachim G., Dr., 71229 Leonberg (DE); Wünning, Joachim A., Dr., 71229 Leonberg (DE)
(74) Vertreter: Rüger, Barthelt & Abel Patentanwälte

(56) Entgegenhaltungen:
- EP-A1- 0 324 043
- EP-A1- 0 463 218
- WO-A-96/20808
- WO-A-02/085781
- WO-A-2005/084771
- DE-A1- 2 102 744
- GB-A- 925 730
- JP-A- 3 094 941
- US-A- 4 574 710
- US-A1- 2006 124 284

## Beschreibung

Die Erfindung betrifft einen Rekuperatorbrenner zur Beheizung eines Volumens, wie beispielsweise eines Ofenraums, oder auch des Innenraums eines Strahlrohrs.

Rekuperatorbrenner dienen z.B. der direkten oder indirekten Beheizung von Industrieöfen. Bei der direkten Beheizung findet die Oxidation des Brennstoffs in dem Ofenraum statt. Bei der indirekten Beheizung, beispielsweise mittels Strahlrohrs, findet die Verbrennung innerhalb eines in den Ofenraum ragenden, gegen diesen jedoch abgeschlossenen Rohrs (Strahlrohr) statt, das dadurch erwärmt wird und Wärmestrahlung abgibt.

Ein Beispiel für einen Rekuperatorbrenner mit oder ohne Strahlrohr ist der EP 0 685 683 B1 zu entnehmen. Der Rekuperator befindet sich in der Ofenwand und hat eine typische Länge von 400 mm und je nach Brennerleistung einen Durchmesser von 100 - 300 mm. Er besteht aus berippten Segmenten aus hitzebeständigem Stahlguss oder auch Keramik. Zur Reduktion der Stickoxiderzeugung wird in dem beheizten Volumen eine starke interne Abgasrezirkulation herbeigeführt, was zu so genannten "flammenloser Oxidation" führt. Dieser Betrieb wird auch Flox®-Betrieb genannt (Flox ist eine eingetragene Marke der WS-Wärmeprozesstechnik GmbH). Brenner dieser Bauart haben je nach Auslegung einen Wirkungsgrad von 65 bis 75%.

Die gleiche Druckschrift offenbart auch einen Regeneratorbrenner. Dieser weist zwei wärmespeichernde Regeneratoren auf, die abwechselnd mit Abgas aufgeheizt werden oder ihre gespeicherte Wärme an zugeführte Verbrennungsluft abgeben. Solche Regeneratorbrenner erreichen Wirkungsgrade von bis zu 90 %, führen aber wegen des erforderlichen abwechselnden Betriebs der beiden Regeneratoren und somit wegen des fortwährenden Umsteuerns zu erhöhtem Installations- und Steuerungsaufwand.

Aus der EP-A-0 324 043 ist ein Rekuperatorbrenner bekannt, dessen Rekuperator einen einteiligen, mit Kanälen versehenen Rekuperator aufweist. Die Kanäle durchsetzen den Rekuperatorkörper. Einige Kanäle werden von Abgas und andere von Frischluft durchströmt. Die frischluftführenden Kanälen sind an dem ofenseitigen Ende geschlossen und über dreieckige Querschlitze an einen Zentralraum angeschlossen.

Die WO 02/085781 A1 offenbart einen Kompakt-Dampf-Reformer, dessen Reaktor durch einen Rekuperator-Brenner beheizt wird. Dieser nutzt als Wärmetauscher zwischen zuströmenden und abströmenden Gasen ein mit Zacken versehenes dünnwandiges Rohr.

Weitere Wärmetauscher sind bekannt. Beispielsweise ist aus der Gebrauchsmusterschrift DE 89 03 155 U1 ein Wärmetauscher bekannt, dessen Wärmetauscherrohre gebogene Ovalquerschnitte aufweisen.

Davon ausgehend ist es Aufgabe der Erfindung, einen Rekuperatorbrenner mit verbessertem Wirkungsgrad zu schaffen.

Diese Aufgabe wird mit dem Rekuperatorbrenner nach Anspruch 1 gelöst:

Der erfindungsgemäße Rekuperatorbrenner weist einen Rekuperator auf, der mehrere Rohre aus einem hitzebeständigen Werkstoff enthält, die zur Vorwärmung der Verbrennungsluft und eventuel auch des Brenngases oder eines Teils desselben, wenn niedrigenergetische Gase, wie beispielsweise Deponiegase, Anwendung finden. Die Wärmetauscherrohre des Rekuperatorbrenners weisen in einem dem Wärmetausch dienenden Abschnitt einen abgeflachten Spaltquerschnitt auf. Bei ausgebildeter Laminarströmung im Spalt steigt der Wärmeübergangskoeffizient α umgekehrt proportional zur der Spaltweite s, so dass mit kleinen Spaltweiten sehr hohe α-Werte erreicht werden. Vorzugweise sind sie außen dem Abgas ausgesetzt und werden innen von Verbrennungsluft durchströmt. An ihrem dem zu beheizenden Volumen zugewandten Ende weisen sie einen Düsenquerschnitt auf, der von dem Spaltquerschnitt abweicht. Der Düsenquerschnitt ist beispielsweise ein Kreisquerschnitt. Er ermöglicht die Beschleunigung des Verbrennungsluftstroms und die Bildung eines Austrittsstrahls, der mit hoher Geschwindigkeit in das zu beheizende Volumen eintritt und Abgasrezirkulation hervorruft. Vorzugsweise wird der Düsenquerschnitt so bemessen, dass Strahlgeschwindigkeiten von z.B. 100 m/s erreicht werden. Dadurch wird ein Abgasrezirkulationsfaktor von z.B. 4 oder 5 erreicht, wodurch die Ausbildung von Temperaturspitzen und somit die thermische NOx-Erzeugung weitgehend verhindert wird.

Erfindungsgemäß ist der Spaltquerschnitt größer als der Düsenquerschnitt. Dadurch wird in dem Spaltbereich eine geringere Strömungsgeschwindigkeit als an der Düse erreicht. Die Wärmetauscherrohre sind zwei verjüngten Ende versehen, deren Umfang geringer als der Umfang des abgeflachten Wärmetauscherabschnitts ausgebildet ist. Vorzugsweise wird ein solches Rohr hergestellt, indem ein Rohr, dessen Umfang etwa dem Umfang des späteren Wärmetauscherabschnitts entspricht, an beiden Enden verjüngt, d.h. im Durchmesser vermindert wird, womit sein Rohrquerschnitt beispielsweise in einem Knetverfahren vermindert wird. Anschließend wird der Wärmetauscherabschnitt zur Erzeugung der Spaltform flachgedrückt. Hier wird bevorzugter Weise eine Spaltweite von s < 3 mm und eine Spaltbreite b > 4s eingehalten.

Auf der kalten Seite können die Enden der Wärmetauscherrohre in Löcher einer Flanschplatte, beispielsweise durch Löten, dicht eingesetzt werden. Die Wärmetauscherrohre sind vorzugsweise nur einseitig gefasst. An der heißen Seite können sie bedarfsweise untereinander durch Verbindungsmittel wie ein Band oder Schweißpunkt aneinander fixiert sein oder auch frei bleiben. In beiden Fällen können sie sich frei dehnen. Sämtliche Rohre können die gleiche Form aufweisen und in Serie gefertigt werden.

Es ist möglich, durch eine entsprechende Biegung der heißen Enden der Wärmetauscherrohre eine Strahlrichtung wie gewünscht vorzugeben. Z.B. können die kranzförmig angeordneten Strahlrohre Düsenenden aufweisen, deren Achsen auf dem Mantel eines Kegels liegen.

Die genannten Wärmetauscherrohre ermöglichen einerseits die Erzielung eines guten Wärmeübergangs vom Abgas auf Verbrennungsluft und andererseits erzeugen sie lediglich einen geringen Druckverlust. Dies wird insbesondere erreicht, wenn der Querschnitt des abgeflachten spaltförmigen Abschnitts größer ist als der Düsenquerschnitt. Somit wird die Strömungsgeschwindigkeit in dem Spaltquerschnitt geringer als an der Düse.

Des Weiteren können die Abgaskanäle zwischen den Rohren in einer etwas größeren Spaltweite ausgeführt werden, um auch im Abgaskanal den Druckverlust zu senken. Der dadurch evtl. verminderte Wärmeübergang kann durch Hilfsheizflächen beispielsweise in Form von Wellblecheinlagen kompensiert werden. Diese können gleichzeitig als Abstandhalter zwischen den Wärmetauscherrohren dienen. Die Wellblecheinlagen und/oder die Wärmetauscherrohre können als Katalysatoren dienen, wenn sie zumindest stellenweise mit einem katalytisch aktiven Material zur Abgasreinigung beschichtet werden.

Die Spaltröhren werden vorzugsweise kranz- oder ringförmig angeordnet. Sie können in mehreren zueinander konzentrischen Ringen angeordnet werden. Wenn einheitliche Spaltrohre verwendet werden, können in den einzelnen Ringen Lücken entstehen, die durch Stege geschlossen werden können.

Der Rekuperatorbrenner ist zumindest dazu eingerichtet, in einem aufgeheizten Volumen eine flammenlose Oxidation herbeizuführen, indem durch die in Strahlen eingeleitete vorgewärmte Luft eine Abgasrezirkulation vor dem Rekuperatorbrenner herbeigeführt wird, so dass zugeführter Brennstoff in einem Gasstrom mit hohem Inertgasanteil oxidiert wird. Diese Betriebsart eignet sich für den aufgeheizten Ofenraum oberhalb 800°C.

Optional kann für den Betrieb des Rekuperatorbrenners an einem Ofenraum unterhalb der Zündtemperatur (etwa 800°C) eine weitere Betriebsart vorgesehen sein. Dazu weist der Rekuperatorbrenner eine Brennkammer auf, in die zumindest ein Teil der Verbrennungsluft und des Brenngases geleitet und dort gezündet werden. In der Brennkammer entsteht eine Flamme deren heiße Abgase gegebenenfalls in Verbindung mit Flammen aus dem Brenner austreten und das Volumen aufheizen.

Optional kann eine dritte Betriebsart vorgesehen sein, die als geboosteter oder unterstützter FLOX^{®}-Betrieb bezeichnet werden kann. Sie eignet sich für den Betrieb des Rekuperatorbrenners, solange in dem beheizten Volumen Temperaturen unterhalb der Zündtemperatur herrschen. In dieser Betriebsart wird ein Teil der Oxidation in der Brennkammer des Brenners bewirkt. Die heißen Abgase dieser Verbrennung treten mit der Verbrennungsluft und einem Anteil des Brennstoffs in Strahlen in den Ofenraum ein und bewirken dort eine Unterstützung der Oxidation des in den Ofenraum eingestrahlten Brennstoffs.

Weitere Einzelheiten vorteilhafter Ausführungsformen der Erfindung ergeben sich aus der Zeichnung, der Beschreibung und Ansprüchen. Die Beschreibung ist auf wesentliche Aspekte der Erfindung und sonstiger Gegebenheiten beschränkt. Die Zeichnung offenbart weitere Details und ist insoweit ergänzend heranzuziehen. Es zeigen:
Fig. 1 den erfindungsgemäßen Rekuperatorbrenner an einer Ofenwand in längs geschnittener Darstellung,
Fig. 2 den Rekuperator des Rekuperatorbrenners nach Fig. 1 in einer Querschnittsansicht,
Fig. 3 ein Wärmetauscherrohr des Rekuperators nach Fig. 2 in einer Seitenansicht,
Fig. 4 das Wärmetauscherrohr nach Fig. 3, geschnitten entlang der Linie IV-IV,
Fig. 5 das Wärmetauscherrohr nach Fig. 3, geschnitten entlang der Linie V-V in Fig. 3,
Fig. 6 eine Vorform des Wärmetauscherrohrs vor Abflachung seines Wärmetauscherabschnitts in Seitenansicht,
Fig. 7 die Vorform gemäß Fig. 6, geschnitten entlang der Linie VII-VII und
Fig. 8 eine abgewandelte Ausführungsform eines Wärmetauscherrohrs anhand einer Schnittdarstellung entsprechend der Schnittlinie IV-IV in Fig. 3.

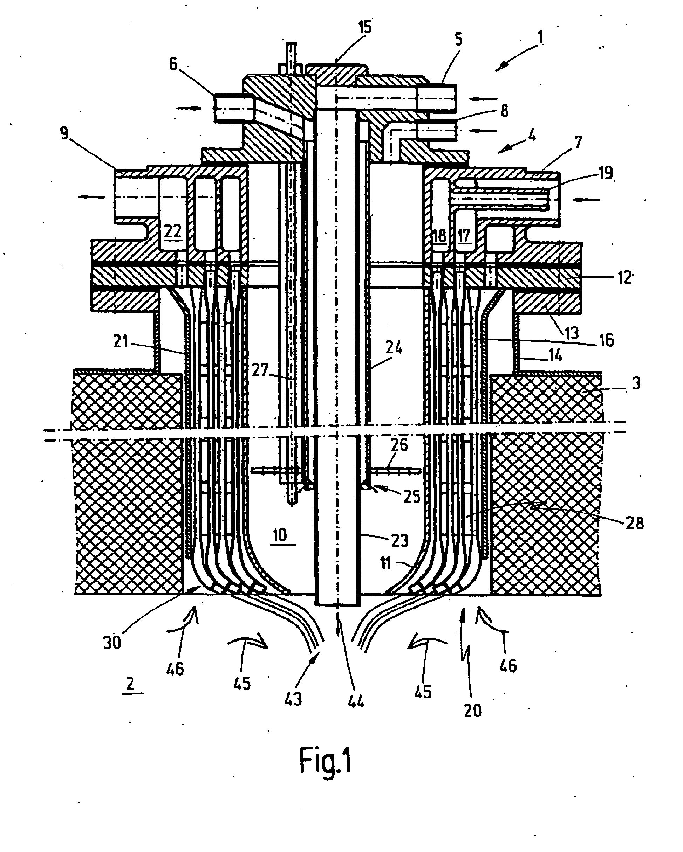

In Fig. 1 ist ein Rekuperator 1 veranschaulicht, der der Beheizung eines Ofenraums 2 dient und dazu an einem Durchbruch einer Ofenwand 3 angeordnet ist. Der Rekuperatorbrenner weist einen Brennerkopf 4 zur Zufuhr von Verbrennungsluft und Brennstoff und zur Abfuhr von Abgasen auf. Dazu sind an dem Brennerkopf 4 ein FLOX®-Gasanschluss 5, ein Aufheizgasanschluss 6, ein FLOX®-Luftanschluss 7, ein Aufheizluftanschluss 8 und ein Abgasanschluss 9 für den Abgasaustritt vorgesehen. Der FLOX®-Gasanschluss 5 und der FLOX®-Luftanschluss 7 dienen der Zuführung von flüssigem dampfförmigem oder gasförmigem Brennstoff und Luft für den Betrieb des Rekuperatorbrenners 1 mit flammenloser Oxidation in dem Ofenraum 2. Der Aufheizgasanschluss 6 und der Aufheizluftanschluss 8 dienen der Befeuerung einer Brennkammer 10 in dem Rekuperatorbrenner 1.

Die Brennkammer 10 ist von einem sich vorzugsweise o-fenseitig verengenden Rohr 11 umgeben, das einseitig an einer Flanschplatte 12 gehalten ist. Die Flanschplatte 12 ist gegebenenfalls unter Zwischenlage entsprechender Dichtungen zwischen dem Brennerkopf 1 und einem Flansch 13 gehalten, der über einen Rohransatz 14 an der Ofenwand 3 abgestützt sein kann. An der Flanschplatte 12 ist eine Anzahl von Bohrungen vorgesehen, die vorzugsweise auf konzentrischen Kreisen um das Rohr 11 und dessen Mittelachse 15 herum angeordnet sind. In die Bohrungen sind z.B. aus hitzebeständigem Stahl bestehende Wärmetauscherrohre 16 eingesetzt und durch geeignete Verbindungsmittel, wie beispielsweise Hartlotverbindungen darin abgedichtet gesichert. Die Bohrungen treffen sich in dem Brennerkopf 4 in einem Luftverteilerkanal 17. Gegebenenfalls kann sich ein Teil der Bohrungen in einem weiteren Verteilerkanal 18 treffen, der mit einem gesonderten Anschluss 19 in Verbindung steht. Der Anschluss 19 ist vorzugsweise konzentrisch in dem FLOX®-Luftanschluss 7 vorgesehen. Auf diese Weise erhält er normalerweise Luft zur Speisung der angeschlossenen Wärmetauscherrohre 16 zur Unterhaltung der flammenlosen Oxidation. Es ist aber auch möglich, über diesen Anschluss 19 dem Verteilerkanal 18, der von dem Luftverteilerkanal 17 getrennt ist, andere Fluide, wie beispielsweise brennbares Gas, zuzuführen, um dieses vorzuwärmen.

Die Wärmetauscherrohre 16 sind in einem ringförmigen Abgaskanal 20 angeordnet, der außen von einem Rohr 21 abgeschlossen wird, dessen Ende an der Flanschplatte 12 gehalten ist. Der Abgaskanal 20 führt zu einem Abgassammler 22 in dem Brennerkopf 4.

In dem Rohr 11 ist ein Brennstoffrohr 23 in Form einer zentralen Gaslanze konzentrisch zu der Mittelachse 15 vorgesehen, um dem Ofenraum 2 Brennstoff für den FLOX®-Betrieb zuzuführen. Konzentrisch zu dem Brennstoffrohr 23 ist ein weiteres mit dem Aufheiz-Gasanschluss 6 in Verbindung stehendes Rohr 24 vorgesehen, an dessen Ende Gasaustrittsöffnungen 25 vorgesehen sind. Diese erzeugen Brennstoffstrahlen vorzugsweise schräg zur Mittelachse 15. In einigem Abstand zu den Gasaustrittsöffnungen 25 kann an dem Rohr 24 eine Siebplatte 26 zur Verwirbelung der in die Brennkammer 10 eingeleiteten Luft vorgesehen sein. Außerdem erstreckt sich in die Brennkammer 10 vorzugsweise eine Zünd- und Überwachungselektrode 27.

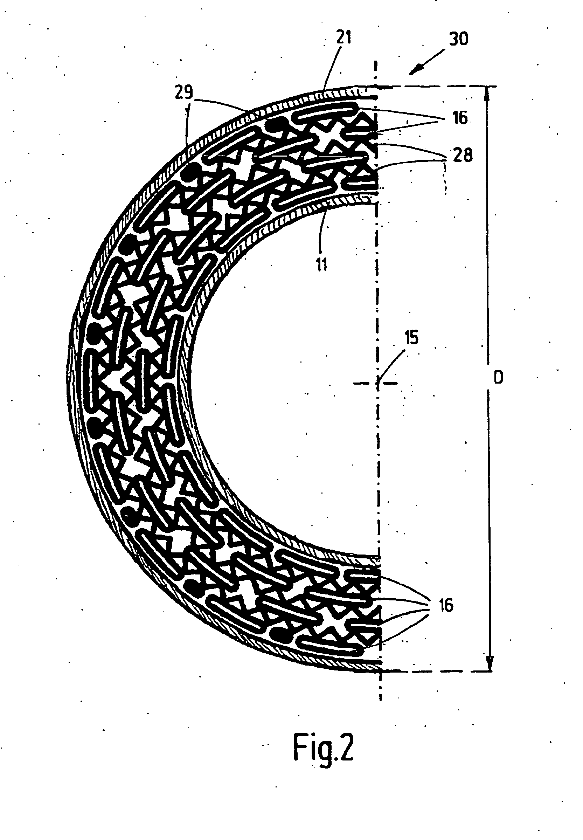

Die Wärmetauscherrohre 16 sind untereinander vorzugsweise im Wesentlichen gleich ausgebildet. Zwischen ihnen sind Füllelemente, beispielsweise in Form von Wellblechelementen 28 vorgesehen, die insbesondere aus Fig. 2 ersichtlich werden. Sie berühren mit ihren Wellen die auf mehreren zu der Mittelachse 15 konzentrischen Kreisen angeordneten Wärmetauscherrohre 16 und halten die Wärmetauscherrohre 16 somit auf Abstand. Darüber hinaus übertragen sie aus dem Abgasstrom aufgenommene Wärme konvektiv und vor allem durch Wärmestrahlung auf die Wärmetauscherrohre 16. Die Wellblechelemente 28 bestehen beispielsweise aus Hitzebeständigem Stahl. Ihre Wellen verlaufen vorzugsweise parallel zu der Mittelachse 15. Zwischen den Wärmetauscherrohren 16 können außerdem, wie Fig. 2 zeigt, Stege 29 vorgesehen sein, um die Entstehung zu großer freier Räume zwischen den Wärmetauscherrohren 16 zu vermeiden. Sowohl die Wärmetauscherrohre 16 als auch die Wellblechelemente 28 können vollständig oder stellenweise mit katalytisch aktiven Material 16a, 28a vorzugsweise zur Abgasbehandlung beschichtet sein.

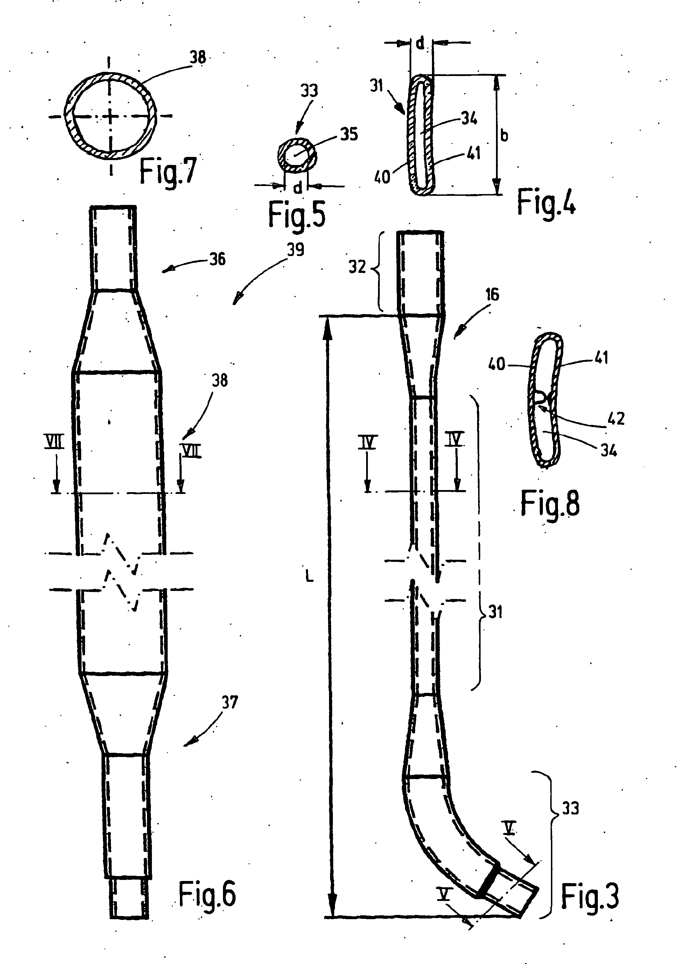

Die Wärmetauscherrohre 16 bilden mit den gegebenenfalls vorhandenen Stegen 29 und Wellblechelementen 28 sowie letztendlich auch den Rohren 11 und 21 einen Rekuperator 30, der beispielsweise einen Außendurchmesser D von 130 mm (Fig. 2), eine Länge L von 400 mm (Fig. 3) aufweist und insgesamt aus 72 Rohren bestehen kann. Ein Wärmetauscherrohr 16 dieses Rekuperators 30 ist in Fig. 3 stellvertretend für alle anderen veranschaulicht. Es weist einen abgeflachten dem Wärmetausch dienenden Abschnitt 31 und Endabschnitte 32, 33 sowie ggf. dazwischen liegende Übergangsabschnitte auf. Wie die Figuren 4 und 5 zeigen, weist der Abschnitt 31 einen anderen Querschnitt auf, als der Abschnitt 33 (Fig. 5) oder 32. Der Abschnitt 31 legt einen Spaltquerschnitt 34 fest, dessen Spaltbreite b vorzugsweise das Vierfache der Spaltweite s übertrifft. Im vorliegenden Ausführungsbeispiel beträgt s = 1,5 mm und b = 15 mm, jeweils von Innenfläche zu Innenfläche des Spaltquerschnitts 34. Hingegen definiert der Abschnitt 33 einen Düsenquerschnitt 35 mit einem Durchmesser von beispielsweise d = 2,5 mm. Somit ist die Fläche des Spaltquerschnitts 34 größer als der Düsenquerschnitt 35.

Der Düsenquerschnitt 35 kann an einem einstückigen Bestandteil des Wärmetauscherrohrs 16 oder an einem angesetzten Teil ausgebildet sein. Außerdem kann der Abschnitt 33 gerade oder wie dargestellt einfach, bogenförmig oder auch s-förmig gebogen ausgebildet sein. Die Herstellung dieses Rohrs erfolgt beispielsweise ausgehend von einem Rohr größeren Durchmessers. Dieses wird beispielsweise in entsprechenden Knetverfahren an seinen Enden 36, 37 verjüngt, wie es Fig. 6 veranschaulicht. In einem zwischen den Enden 36, 37 liegenden Abschnitt 38 bleibt der ursprüngliche Durchmesser erhalten. Die so erzeugte Vorform 39 des Wärmetauscherrohrs 16 weist gemäß Fig. 7 in dem Abschnitt 38 zunächst noch einen Kreisquerschnitt auf. Dieser wird danach in einem plastischen Umformverfahren abgeflacht, um den Spaltquerschnitt 34 gemäß Fig. 4 zu erzeugen.

Vorzugsweise wird der Spaltquerschnitt 34 von flachen Wänden 40, 41 begrenzt. Wie Fig. 8 zeigt, können die Wand 40 und/oder die Wand 41 mit gleich oder unterschiedlich großen Noppen 42 versehen sein, die in den Spaltquerschnitt 34 hineinragen und sich vorzugsweise gegenseitig berühren. Diese Noppen 42 bilden eine Abstützung der Wände 40, 41, um den Kollaps des Spaltquerschnitts 34 zu verhindern. Durch die Noppen 42 kann auch eine Schweißverbindung zwischen den Wänden 40, 41 geschaffen werden. Dies ermöglicht die Konstruktion besonders dünnwandiger Wärmetauscherrohre 16.

Der insoweit beschriebene Rekuperatorbrenner 1 weist insgesamt eine Wärmeübertragungsfläche von beispielsweise 0,95 qm² auf. Er arbeitet wie folgt:

Zum Aufheizen des Ofenraums 2 wird z.B. Erdgas über dem Aufheizgasanschluss 6 und Luft über dem Aufheizluftanschluss 8 zugeführt. In der Brennkammer 10 wird eine Flamme gezündet, deren heiße Abgase in den Ofenraum 2 gelangen, um diesen aufzuheizen. Ist dies geschehen, kann der Rekuperatorbrenner 1 in FLOX®-Betrieb übergehen.

Dazu wird die Luftzufuhr auf den FLOX®-Luftanschluss 7 und die Gaszufuhr auf den FLOX®-Gasanschluss 5 umgeschaltet. Die Verbrennungsluft strömt nun durch die Wärmetauscherrohre 16 in den Ofenraum und bildet dort in Fig. 1 angedeutete Strahlen 43 aus. Der Brennstoff wird durch das Brennstoffrohr 23 in den Ofenraum 2 geleitet, was ein Pfeil 44 andeutet. Es wird eine Abgasrezirkulation erzeugt (Pfeil 45). Nur ein Teil des Verbrennungsgases gelangt in den Abgaskanal 20 (Pfeil 46).

Bei einer Luftzufuhr von 36 m³/Std. zur Verbrennung von 35 kW Erdgas wird die Luft von 20°C auf 880°C vorgewärmt, wenn das Abgas aus dem Ofen mit 1000°C in den Rekuperator 30 einströmt. Die Abgastemperatur an dem Abgasanschluss 9 beträgt 300°C und der Abgasverlust 14 %. Bei Halblast (17 kW) steigt die Luftvorwärmung auf 950°C, während die Abgastemperatur auf 230°C und der Abgasverlust auf 10 % fällt.

Die zweiundsiebzig Luftstrahlen der entsprechenden offenen Enden der Wärmetauscherrohre 16 saugen auf kurzem Wege die vielfache Menge Ofengas an, so dass die Temperatur in der Reaktionszone unter 1500°C bleibt, womit die thermische NOx-Bildung unterdrückt wird.

### Vergleich mit dem Stand der Technik

Ein Rippenrekuperatorrohr beispielsweise gemäß der EP 0 685 683 B1 wird mit dem Spaltrohrrekuperator gemäß vorliegender Beschreibung verglichen:

| | Rippenrohr | Spaltrohr |
|---|---|---|
| Äußerer Durchmesser | 130 mm | 130 mm |
| Effektive Länge | 400 mm | 400 mm |
| Wärmeübertragungsfläche | 0,35m² | 0,95m² |
| Werkstoffaufwand | 15 kg | 7,5 kg |
| Abgaseintrittstemperatur | 1000°C | 1000°C |
| Wärmeleistung netto | 30 kW | 30 kW |
| Wirkungsgrad | 72% | 86% |
| Zugeführte Energie (Erdgas) | 41,7 kW | 34,9 kW |
| Abgasverlust | 11,7 kW | 4,9 kW |
| Luftvorwärmung | 540°C | 880°C |
| Abgastemperatur | 600°C | 300°C |
| NOx (bei flammenloser Oxidation) | <50 ppm | <50 ppm |
| Druckverlust | <60 mbar | <60 mbar |

Daraus wird ersichtlich, dass bei gleichem Bauvolumen der Energieverbrauch um 16,3 % gesenkt und außerdem der Werkstoffaufwand um 50 % reduziert werden kann. Es wird insgesamt ein robuster hocheffektiver Rekuperatorbrenner geschaffen. Dieser weist zumindest optional eine Brennkammer für den Aufheizbetrieb auf und ist ansonsten für den FLOX®-Betrieb eingerichtet. Ein Übergangsbetrieb ist möglich, indem ein Teil des Brennstoffs, beispielsweise 10 bis 40 % desselben, der Brennkammer 10 zugeführt wird, während der andere Teil des Brennstoffs über das zentrale Brennstoffrohr 22 in den Ofenraum geleitet wird. Entsprechend wird ein Teil der Verbrennungsluft der Brennkammer 10 und ein anderer Teil über den Rekuperator 30 in den Ofenraum geleitet. Dabei ist es möglich, in einer noch nicht ausreichend aufgeheizten Ofenkammer FLOX®-Betrieb zu erzielen. Bei Anwendungsfällen mit sehr langen Aufheizphasen oder bewusst niedriger gehaltener Ofenraumtemperatur wird wenigstens ein Teil des Brennstoffs unter FLOX®-Bedingungen oxidiert, wodurch insgesamt eine Senkung der NOx-Emission erreicht wird.

Es wurde ein robuster hocheffektiver Rekuperatorbrenner geschaffen. Dieser weist zumindest optional eine Brennkammer für den Aufheizbetrieb auf und ist ansonsten für den FLOX®-Betrieb eingerichtet. Als mit Rekuperator 30 zur Vorwärmung von Verbrennungsluft mittels Abgaswärme im Gegenstrom, sind Wärmetauscherrohre 16 vorgesehen, die in einem dem Wärmetausch dienenden Abschnitt 31 einen abgeflachten Spaltquerschnitt 34 und an ihrem dem Volumen 2 zugewandten Ende 33 einen von dem Spaltquerschnitt 34 abweichenden Düsenquerschnitt 35 aufweisen.

### Bezugszeichen

- 1: Rekuperatorbrenner
- 2: Ofenraum
- 3: Ofenwand
- 4: Brennerkopf
- 5: FLOX®-Gasanschluss
- 6: Aufheiz-Gasanschluss
- 7: FLOX®-Luftanschluss
- 8: Aufheiz-Luftanschluss
- 9: Abgasanschluss
- 10: Brennkammer
- 11: Rohr
- 12: Flanschplatte
- 13: Flansch
- 14: Rohransatz
- 15: Mittelachse
- 16: Wärmetauscherrohr
- 17: Luftverteilerkanal
- 18: Verteilerkanal
- 19: Anschluss
- 20: Abgaskanal
- 21: Rohr
- 22: Abgassammler
- 23: Brennstoffrohr
- 24: Rohr
- 25: Gasaustrittsöffnungen
- 26: Siebplatte
- 27: Zünd- und Überwachungselektrode
- 28: Wellblechelemente
- 16a, 28a: katalytisch aktives Material
- 29: Stege
- 30: Rekuperator
- 31, 32, 33: Abschnitt
- 34: Spaltquerschnitt
- 35: Düsenquerschnitt
- 36, 37: Enden
- 38: Abschnitt
- 39: Vorform
- 40, 41: Wände
- 42: Noppen
- 43: Strahlen
- 44, 45, 46: Pfeil

## Patentansprüche

1. Rekuperatorbrenner (1) zur Beheizung eines Volumens (2),
mit einem Rekuperator (30) zur Vorwärmung von Verbrennungsluft mittels Abgaswärme im Gegenstrom,
wobei der Rekuperator (30) Wärmetauscherrohre (16) enthält, die:
- in einem dem Wärmetausch dienenden Abschnitt (31) einen abgeflachten Spaltquerschnitt (34) und
- an ihrem dem Volumen (2) zugewandten Ende (33) einen von dem Spaltquerschnitt (34) abweichenden Düsenquerschnitt (35)
aufweisen, und
mit einer Brennstoffzuführeinrichtung (23) zur Einleitung von Brennstoff in das Volumen (2) **dadurch gekennzeichnet, dass** die Wärmetauscherrohre (16) jeweils zwei verjüngte Enden (32, 33) aufweisen, deren Umfänge geringer sind als der Umfang des dem Wärmetausch dienenden abgeflachten Abschnittes (31).

2. Rekuperatorbrenner nach Anspruch 1, **dadurch gekennzeichnet, dass** der Spaltquerschnitt (34) größer ist als der Düsenquerschnitt (35).

3. Rekuperatorbrenner nach Anspruch 1, **dadurch gekennzeichnet, dass** der Spaltquerschnitt (34) eine Spaltweite s und eine Spaltbreite b aufweist, die zumindest so groß ist wie vierfache Spaltweite s.

4. Rekuperatorbrenner nach Anspruch 1, **dadurch gekennzeichnet, dass** die Wärmetauscherrohre (16) an einem lufteintrittsseitigen Ende einen Kreisquerschnitt aufweisen.

5. Rekuperatorbrenner nach Anspruch 1, **dadurch gekennzeichnet, dass** die Wärmetauscherrohre (16) an ihrem lufteintrittseitigen Ende (32) an einer Flanschplatte (12) befestigt sind.

6. Rekuperatorbrenner nach Anspruch 1, **dadurch gekennzeichnet, dass** zumindest eines der Wärmetauscherrohre (16) an einen Anschluss (19) angeschlossen ist, über den zumindest optional Brennstoff zuführbar ist.

7. Rekuperatorbrenner nach Anspruch 1, **dadurch gekennzeichnet, dass** in Nachbarschaft der Wärmetauscherrohre (16) zumindest ein Wellblechelement (28) angeordnet ist.

8. Rekuperatorbrenner nach Anspruch 7, **dadurch gekennzeichnet, dass** das Wellblechelement (28) an zumindest einer Stelle mit einem katalytisch aktiven Material (28a) versehen ist.

9. Rekuperatorbrenner nach Anspruch 1, **dadurch gekennzeichnet, dass** zumindest eines der Wärmetauscherrohre (16) an zumindest einer Stelle mit einem katalytisch aktiven Material (16a) versehen ist.

10. Rekuperatorbrenner nach Anspruch 1, **dadurch gekennzeichnet, dass** die Wärmetauscherrohre (16) um eine Mittelachse (15) herum angeordnet sind, wobei die Enden (33) zu der Mittelachse (15) hin geneigt sind.

11. Rekuperatorbrenner nach Anspruch 1, **dadurch gekennzeichnet, dass** das Wärmetauscherrohr (16) nahtlos einstückig ausgebildet ist.

## Claims

1. Recuperator burner (1) for heating a space (2),
with a recuperator (30) for preheating combustion air by means of waste heat in counterflow,
wherein the recuperator (30) contains heat exchange pipes (16), which:
• have a flattened gap cross-section (34) in a section (31) serving for heat exchange and
• have a nozzle cross-section (35) differing from the gap cross-section (34) at its end (33) facing the space (2),
and
with a fuel supply means (23) for feeding fuel into the space (2),
**characterised in that** the heat exchange pipes (16) respectively have two tapered ends (32, 33), the periphery of which is smaller than the periphery of the flattened section (31) serving for heat exchange.

2. Recuperator burner according to claim 1, **characterised in that** the gap cross-section (34) is larger than the nozzle cross-section (35).

3. Recuperator burner according to claim 1, **characterised in that** the gap cross-section (34) has a gap span s and a gap width b, which is at least as large as four-times the gap span s.

4. Recuperator burner according to claim 1, **characterised in that** the heat exchange pipes (16) have a circular cross-section at an end on the air intake side.

5. Recuperator burner according to claim 1, **characterised in that** the heat exchange pipes (16) are fastened to a flange plate (12) at their end (32) on the air intake side.

6. Recuperator burner according to claim 1, **characterised in that** at least one of the heat exchange pipes (16) is connected to a connection (19), by means of which the at least optional fuel can be supplied.

7. Recuperator burner according to claim 1, **characterised in that** at least one corrugated sheet metal element (28) is arranged in the vicinity of the heat exchange pipes (16).

8. Recuperator burner according to claim 7, **characterised in that** the corrugated sheet metal element (28) is provided with a catalytically active material (28a) in at least one location.

9. Recuperator burner according to claim 1, **characterised in that** at least one of the heat exchange pipes (16) is provided with a catalytically active material (16a) in at least one location.

10. Recuperator burner according to claim 1, **characterised in that** the heat exchange pipes (16) are arranged around a centre axis (15), wherein the ends (33) are inclined towards the centre axis (15).

11. Recuperator burner according to claim 1, **characterised in that** the heat exchange pipes (16) are seamless and configured in one piece.

## Revendications

1. Brûleur à récupération (1) pour chauffer un volume (2), comprenant un récupérateur (30) pour préchauffer de l'air de combustion à l'aide de chaleur de gaz brûlés circulant à contre-courant, le récupérateur (30) renfermant des tubes d'échange de chaleur (16), lesquels présentent, dans une portion (31) servant à l'échange de chaleur, une section transversale en fente aplatie (34) et, à son extrémité (33) tournée vers le volume (2), une section transversale en buse (35) différente de la section transversale en fente (34), et comprenant un dispositif d'amenée de combustible (23) pour introduire du combustible dans le volume (2), **caractérisé en ce que** les tubes d'échange de chaleur (16) comportent chacun deux extrémités rétrécies (32, 33) dont le périmètre est inférieur au périmètre de la portion aplatie (31) servant à l'échange de chaleur, le tube d'échange de chaleur (16) étant conformé d'un seul tenant sans soudure.

2. Brûleur à récupération selon la revendication 1, **caractérisé en ce que** la section transversale en fente (34) est supérieure à la section transversale en buse (35).

3. Brûleur à récupération selon la revendication 1, **caractérisé en ce que** la section transversale en fente (34) présente une hauteur de fente s et une largeur de fente b, laquelle est au moins égale au quadruple de la hauteur de fente (s)

4. Brûleur à récupération selon la revendication 1, **caractérisé en ce que**, à une extrémité côté entrée d'air, les tubes d'échange de chaleur (16) présentent une section transversale circulaire.

5. Brûleur à récupération selon la revendication 1, **caractérisé en ce que**, à leur extrémité côté entrée d'air (32), les tubes d'échange de chaleur (16) sont fixés à une plaque de raccordement (12).

6. Brûleur à récupération selon la revendication 1, **caractérisé en ce qu'**au moins un des tubes d'échange de chaleur (16) est raccordé à un raccord (19) servant au moins optionnellement à amener du combustible.

7. Brûleur à récupération selon la revendication 1, **caractérisé en ce qu'**au voisinage des tubes d'échange de chaleur (16) est disposé au moins un élément en tôle ondulée (28).

8. Brûleur à récupération selon la revendication 7, **caractérisé en ce que** l'élément en tôle ondulée (28) est garni en au moins un endroit d'une matière catalytiquement active (28a).

9. Brûleur à récupération selon la revendication 1, **caractérisé en ce qu'**au moins un des tubes d'échange de chaleur (16) est garni en au moins un endroit d'une matière catalytiquement active (16a).

10. Brûleur à récupération selon la revendication 1, **caractérisé en ce que** les tubes d'échange de chaleur (16) sont disposés autour d'un axe central (15), les extrémités (33) étant inclinées vers l'axe central (15).

11. Brûleur à récupération selon la revendication 1, **caractérisé en ce que** le tube d'échange de chaleur (16) est conformé d'un seul tenant sans soudure.
